# FASCICULE DE BREVET EUROPEEN

(11) **EP 2 263 219 B1**
(45) Date de publication et mention de la délivrance du brevet: **26.04.2017**
(21) Numéro de dépôt: 09722618.7
(22) Date de dépôt: 02.03.2009
(51) Int. Cl.: G08B 17/107, G08B 17/113, G08B 17/10

(54) **DÉTECTEUR DE FUMÉE COMPACT**
KOMPAKTER RAUCHMELDER
COMPACT SMOKE DETECTOR

(30) Priorité: 03.03.2008 FR 0851356
(43) Date de publication de la demande: 22.12.2010
(73) Titulaire: F.a.r.e, 45308 Pithiviers Cedex (FR)
(72) Inventeur: MERLET, Loïc, 45000 Orleans (FR); MAILLARD, Adrien, 45100 Orleans (FR)
(74) Mandataire: Pontet Allano & Associes
(86) Numéro de dépôt international: PCT/FR2009/050338
(87) Numéro de publication internationale: WO 2009/115720

(56) Documents cités:
- EP-A- 0 227 320
- WO-A-96/21208
- WO-A-97/04429
- GB-A- 2 281 619

## Description

La présente invention concerne un détecteur de fumée. L'invention se rapporte plus particulièrement à un détecteur de fumées utilisant des moyens optiques.

Des détecteurs de fumées sont installés dans des environnements extrêmement variés, doivent évidemment être en état de fonctionnement permanent, et sont amenés à détecter différents types d'incendies qui se traduisent par différentes natures de fumées.

Les fumées visibles sont schématiquement réparties en deux catégories, que l'on désigne par fumées à grosses particules et fumées à particules fines. Les grosses particules correspondent à des feux couvants et sont généralement de couleur claire. Leur diamètre s'étend d'environ 0,3 µm jusqu'à 10 µm ; au-delà, on considère qu'il ne s'agit plus de fumée mais de suies ou de grains de poussière.
Les particules fines correspondent à des feux flambants et sont généralement de couleur sombre. Leur dimension s'étend de 0,001 jusqu'à 0,3 µm. La vérification de conformité à la norme française NF EN54-7, fait appel à des essais d'efficacité utilisant des foyers type référencés TF2, TF3, TF4 et TF5. Ces quatre foyers type permettent de reconstituer la plupart des foyers réels en générant des particules qui couvrent le spectre de diamètres s'étendant de moins de 0,1 µm à plus de 2 µm de diamètre. Les foyers TF2 et TF3 sont des foyers dits « couvants » et génèrent des fumées de couleur claire avec des diamètres de particule moyens ou gros. Les foyers TF4 et TF5 génèrent des fumées sombres avec des diamètres de particules fines et moyennes.

Les détecteurs connus, notamment ceux fabriqués en grande série à un coût abordable, utilisent différentes technologies :
La détection ionique suppose la présence de deux électrodes dans une chambre, dans laquelle est placé un matériau radioactif émettant des rayons alpha. Une tension est appliquée aux bornes des électrodes. Un faible courant apparaît du fait de l'ionisation de l'air de la chambre. Lorsque des particules de fumées y pénètrent, les atomes les constituant se recombinent avec une partie des électrons libres présents dans la chambre, entraînant une diminution du courant, puis la transmission d'une information d'alarme lorsque la diminution du courant passe en dessous d'un seuil prédéterminé (correspondant à une situation probable d'incendie).

Ce type de détecteur présente le grand intérêt d'avoir une sensibilité importante sur les particules fines mais faible sur les particules moyennes et nulle sur les grosses particules. Les particules fines correspondant à des foyers « ouverts », ce type de détecteur réagit très rapidement dès qu'il y a apparition de flammes, ce qui n'est pas le cas des autres technologies commercialisées actuellement. En revanche, bien que le rayonnement du matériau radioactif soit très faible et sans aucun risque dans les conditions normales d'emploi, cette technologie est décriée et une pression des pouvoirs publics tend à la supprimer. En outre, la source radioactive contenue dans le détecteur nécessite des précautions de recyclage, ainsi qu'une élimination complexe et coûteuse.

La détection optique est une autre technologie connue, qui met à profit l'effet Tyndall. Le détecteur est équipé d'une chambre optique intégrant un émetteur (communément désigné par le terme de « LED » pour « Light Emitting Diode ») et un récepteur photosensible (également désigné par le terme de « photodiode »). Le détecteur commande l'émission d'un signal lumineux et mesure le signal résiduel perçu par le récepteur. En l'absence de fumée, le signal lumineux émis est réfléchi sur les parois de la chambre optique dont une très faible quantité est recueillie par le récepteur. Lorsque l'atmosphère se charge de particules, le signal lumineux émis se diffuse sur celles-ci qui le réfléchissent partiellement vers le récepteur, augmentant ainsi le signal perçu par ce dernier. Un microcontrôleur, intégrant un logiciel embarqué, analyse les variations pré amplifiées du récepteur et, si celles-ci dépassent un seuil fixé par le constructeur, transmet une information d'alarme, qui conduit à l'activation de différents types de moyens visuels ou sonores. La longueur d'onde la plus communément employée pour la réalisation des détecteurs optiques de fumée est l'infra rouge en raison de son excellent rapport puissance d'émission/coût de revient. L'évolution de la technologie des diodes LED ces dernières années a permis l'utilisation d'autres longueurs d'ondes telles que le bleu.

Le détecteur optique présente l'avantage de recourir à des moyens très courants, peu coûteux et respectueux de l'environnement, ne présentant aucun risque pour la santé et ne posant pas de difficulté de récupération en fin de vie. Par contre, ce type de détecteur utilisant un émetteur et un récepteur optiques présente l'inconvénient de ne pas offrir la même sensibilité aux grosses particules et aux particules fines. Un tel détecteur optique est très efficace pour la détection des grosses particules, et l'est dans une moindre mesure pour les particules fines en raison de leur faible réflectivité (selon la théorie de Mie).

Pour pallier cette difficulté, des détecteurs optiques ont été proposés, sur la base d'une aptitude différente des grosses particules et des particules fines à diffuser la lumière (par réflexion) dans les différentes directions. Si l'on nomme « diffusion avant » le cas de la lumière réfléchie ayant une composante parallèle au faisceau lumineux qui va en s'éloignant de la source lumineuse, et « diffusion arrière » le cas de la lumière réfléchie ayant une composant également parallèle au faisceau lumineux qui revient vers la source lumineuse, il a alors été observé, en confirmation de la théorie de Mie, que les grosses particules étaient davantage propices à la diffusion avant (c'est-à-dire diffusaient plus vers l'avant que vers l'arrière), tandis que les particules fines favorisaient autant la diffusion avant que la diffusion arrière (c'est-à-dire diffusaient autant vers l'avant que vers l'arrière). Partant de ce constat, des détecteurs optiques connus, tel que celui présenté dans le document US 4 103 997, permettent de déterminer tant la diffusion vers l'avant que la diffusion vers l'arrière, pour déterminer le type de fumée, et adapter les traitements des signaux de manière à déclencher l'alarme plus ou moins vite et/ou avec une sensibilité peu dépendante du type de fumée. Le principe est soit d'abaisser le seuil d'alarme quand les particules sont difficiles à détecter et de l'augmenter quand elles sont plus faciles à détecter, soit de proposer un algorithme de traitement différent selon la taille des particules. Dans un tel capteur optique, la détermination de la diffusion avant et de la diffusion arrière suppose l'emploi de trois moyens optoélectroniques (LED ou photodiode), tels que deux émetteurs et un récepteur ou un émetteur et deux récepteurs.

Les détecteurs optiques connus qui ont généralement une forme extérieure de révolution coaxiale avec une chambre optique cylindrique présentent un encombrement très important, qui s'accroît encore lorsque la chambre doit contenir trois moyens optoélectroniques, comme vu précédemment.

En outre les détecteurs connus comprennent une voie d'accès périphérique à la chambre pour l'introduction de la fumée dans celle-ci. Si l'on tient compte des éléments classiques qui composent également un détecteur de fumée, tels qu'un piège à lumière ambiante (ailettes ou chicanes empêchant la pénétration de la lumière ambiante vers la chambre), ou encore une grille de protection contre les insectes, généralement disposée à la périphérie de la chambre optique, on comprend que l'encombrement radial du détecteur est une caractéristique difficile à maîtriser.

De plus, cet encombrement radial dégrade également une caractéristique importante des détecteurs optiques, qui concerne la non directivité. Le détecteur sera plus ou moins sensible en fonction de la direction radiale d'introduction de la fumée dans la chambre, par rapport à l'orientation des moyens optoélectroniques dans la chambre (selon que la fumée s'introduit « de dos » ou « de côté » par rapport aux axes des moyens optoélectroniques), mais aussi par rapport à la dimension radiale de la chambre (plus le volume de la chambre est important, plus la fumée met du temps pour venir occuper la zone de détection au croisement des axes des moyens optoélectroniques).

Par ailleurs, les détecteurs connus présentent l'inconvénient de proposer une chambre optique accueillant un nombre limité de moyens optoélectroniques (puisqu'il y a une incidence directe sur l'encombrement du détecteur), qui plus est avec un agencement figé, ne permettant pas de les disposer dans différentes configurations, en fonction du besoin et de l'algorithme de traitement mis en oeuvre.

On notera également que les détecteurs optiques connus comprenant trois moyens optoélectroniques peuvent difficilement loger de manière parfaitement intégrée d'autres moyens de détection, tels qu'une thermistance ou un capteur de gaz, compte tenu de l'encombrement évoqué ci-dessus.

On connaît également :
Le document EP 227 320 A2 décrit un détecteur de fumées ayant des moyens optiques agencés selon des positions particulières. Le document porte sur la réalisation des empreintes destinées à ces moyens optiques dans le boîtier. Ce document décrit un accès radial de la fumée dans la chambre de détection.

Le document WO 97/04429 A décrivant un détecteur de fumées ayant une faible dimension longitudinale. Ce détecteur comporte des voies d'accès radiales pour l'insertion de la fumée. Ces voies d'accès sont situées au même niveau que la chambre de détection.

Le document WO 96/21208 décrit un détecteur de fumées pourvu de différentes parties démontables.

Le document GB 2 281 619 décrit également un détecteur de fumées ayant une structure agencée en labyrinthe et pourvue de moyens optiques. Le détecteur est formé pour une introduction radiale de la fumée dans la chambre de détection.

Le document EP 0 549 888 A1 décrivant un détecteur de fumée prévu pour être installé sur un plafond bas. La hauteur d'un tel détecteur est primordiale, d'où une conception compacte. Ce détecteur est encastré et l'objectif est de limiter différentes couches successives longitudinales. Il comprend des ailettes permettent l'arrivée de fumée en façade et sur les côtés.

Le document GB 2 212 657 A décrivant un détecteur de fumée comprenant plusieurs parois latérales avec des ouvertures en quinconce. Cette disposition des parois latérales permet de limiter la quantité d'air pénétrant. Ce détecteur comporte plusieurs électrodes définissant deux chambres d'ionisation A et B. Par conséquent, les ouvertures permettent un accès de fumée directement au niveau d'une chambre d'ionisation.

Le but de la présente invention est de pallier tout ou partie des inconvénients précédents.

A cet effet, l'invention a pour objet un détecteur de fumée tel que défini dans la revendication 1.

Ainsi, le détecteur peut comporter une chambre dont l'encombrement est limité dans les directions parallèles au plan en question. Lorsque le détecteur est fixé à un plafond horizontal et a une forme extérieure de révolution coaxiale avec une chambre cylindrique, c'est l'encombrement radial qui se trouve particulièrement limité. Pour une personne observant le détecteur par en dessous, cet encombrement radial est plus visible que l'encombrement longitudinal.

La chambre est donc en mesure d'accueillir des moyens optoélectroniques multiples, pouvant être agencés de différentes façons. Cette modularité du détecteur permet d'adapter un détecteur unique à différents usages ou procédés de mis en oeuvre. Un tel détecteur procure ainsi une grande souplesse d'utilisation.

Le détecteur peut en outre intégrer avec une grande compacité des moyens de guidage de la fumée, des moyens de limitation de la lumière ambiante diffusée vers la paroi d'accès et une protection contre les insectes, qui sont particulièrement simples de conception, peu coûteux et s'adaptent parfaitement à la chambre, sans induire un encombrement supplémentaire rédhibitoire.

Selon d'autres caractéristiques avantageuses de l'invention,
- la chambre a une forme de révolution autour d'un axe longitudinal qui est sensiblement vertical lorsque le détecteur est fixé classiquement à un plafond, le capot délimitant la chambre ayant en outre la forme générale d'une cuvette,
- la paroi d'accès est constituée d'une grille conformée pour laisser passer la fumée et interdire l'accès aux insectes,
- le détecteur comprend un déflecteur destiné à guider la fumée vers la paroi d'accès, le déflecteur étant accolé à une face extérieure du fond du capot, via des nervures formant entretoises, de manière à ménager une voie d'accès périphérique pour la fumée,
- les nervures sont orientées de manière sensiblement radiale par rapport à l'axe longitudinal, de manière à guider la fumée de façon sensiblement radiale depuis la voie d'accès périphérique vers la paroi d'accès de la chambre,
- le déflecteur comprend une première surface de guidage de révolution autour de l'axe longitudinal, conformée de manière à se rapprocher de la paroi d'accès à mesure que l'on se rapproche de l'axe longitudinal, ladite première surface de guidage étant sensiblement à l'aplomb de la paroi d'accès.
- le déflecteur comprend une seconde surface de guidage de révolution autour de l'axe longitudinal, prolongeant le bord extérieur de la première surface, de manière à présenter un angle rentrant avec la première surface, dans un plan de section radial des surfaces de guidage, l'espace ménagé entre le bord extérieur de ladite seconde surface de guidage et la face extérieure du fond du capot constituant la voie d'accès périphérique pour la fumée,
- au moins l'une desdites surfaces de guidage comporte un relief strié pour empêcher la réflexion de la lumière ambiante extérieure vers la paroi d'accès.

A titre d'exemple,
- le détecteur comprend au moins un émetteur, tel qu'une diode électroluminescente, destiné à générer au moins un faisceau lumineux à l'intérieur de la chambre, et au moins un récepteur, tel qu'une photodiode, destiné à recevoir au moins une partie du faisceau lumineux réfléchi par la présence d'une quantité de fumée introduite dans la chambre, ledit récepteur étant adapté à envoyer un signal électrique, sensiblement proportionnel à la quantité de fumée qui pénètre à l'intérieur de la chambre, vers une unité de traitement,
- le détecteur comprend un support optique doté d'au moins trois logements dans lesquels sont situés un moyen optoélectronique d'un premier type et deux moyens optoélectroniques d'un second type, le premier et le second type de moyens optoélectroniques correspondant respectivement à un émetteur et à un récepteur ou inversement,
- le support optique est doté d'au moins quatre logements dans lesquels sont situés un moyen optoélectronique d'un premier type et deux moyens optoélectroniques d'un second type, ou inversement, au moins un logement pouvant être vacant,
- les moyens optoélectroniques sont orientés de manière que leurs axes se recoupent dans un plan sensiblement parallèle au plan de la surface d'appui extérieure du détecteur,
- les moyens optoélectroniques sont disposés de manière que leurs axes se recoupent dans un plan sensiblement perpendiculaire au plan de la surface d'appui extérieure du détecteur,
- le support optique a la forme générale d'un U dont chaque branche est dirigée vers la paroi d'accès et renferme les logements destinés à accueillir au moins un émetteur et dont la base renferme au moins un logement destiné à accueillir un récepteur,
- les logements destinés à recevoir les émetteurs dans chaque branche du U sont conformés de manière que les angles formés par les axes optiques de ces derniers et l'axe optique du récepteur forment deux angles respectifs compris entre 90° et 120°, et entre 45° et 90° respectivement,
- au moins un des logements destiné à accueillir un émetteur comporte un canon ayant un profil général successivement resserré, puis élargi puis resserré en s'éloignant de l'extrémité avant de l'émetteur jusqu'à la bouche de sortie du canon,
- la surface intérieure du canon comporte un relief strié destiné à limiter la réflexion de la lumière sur la surface intérieure du canon,
- la bouche de sortie du canon a une forme générale aplatie, ayant une dimension nominale dans une première direction parallèle au plan de la surface d'appui extérieure du détecteur et une dimension inférieure à la dimension nominale dans une seconde direction perpendiculaire à la première,
- le support optique est monté sur une platine intégrant l'unité de traitement et comporte des moyens de fixation avec le capot,
- la platine comporte des moyens de fixation avec une base, laquelle comporte également des moyens de fixation avec une enveloppe extérieure, ladite base étant destinée à venir au contact d'un socle via la surface d'appui,
- le détecteur comprend un capteur de gaz.

Selon d'autres caractéristiques avantageuses de l'invention,
- le déflecteur et/ou le capot comporte(nt) un passage pour le raccordement filaire d'une thermistance, supportée par le déflecteur,
- le détecteur comprend un témoin lumineux constitué d'un guide de lumière s'étendant d'une zone périphérique de l'enveloppe extérieure à son extrémité reliée à un émetteur luminescent, jusqu'à une zone adjacente à l'axe longitudinal à son extrémité opposée.

L'invention sera mieux comprise à la lecture de la description qui va suivre et à la lumière des dessins annexés dans lesquels :
- la figure 1 représente une vue d'ensemble du détecteur selon l'invention,
- la figure 2 représente une vue éclatée du détecteur selon l'invention illustrant ses différents composants,
- la figure 3 représente une vue du capot et du déflecteur assemblés suivant l'invention,
- les figures 4A à 4D représentent des vues en perspective, de côté et de face du capot selon l'invention,
- les figures 5A à 5D représentent des vues en perspective, de côté et de face du déflecteur selon l'invention,
- la figure 6 représente une vue schématique en coupe du capot et du déflecteur assemblés selon l'invention,
- les figures 7A et 7B représentent une première partie du support optique selon l'invention, respectivement vue de l'intérieur et de l'extérieur,
- les figures 8A et 8B représentent une seconde partie du support optique selon l'invention, respectivement vue de l'intérieur et de l'extérieur,
- les figures 9A et 9B sont des vues schématiques en coupe longitudinale du logement accueillant un émetteur luminescent, selon deux modes de réalisation de l'invention,
- les figures 10A et 10B sont des vues schématiques de face de la bouche de sortie du logement accueillant un émetteur luminescent, selon deux modes de réalisation de l'invention,
- les figures 11A et 11B sont des vues de côté et de dessous de l'enveloppe extérieure du détecteur selon l'invention.

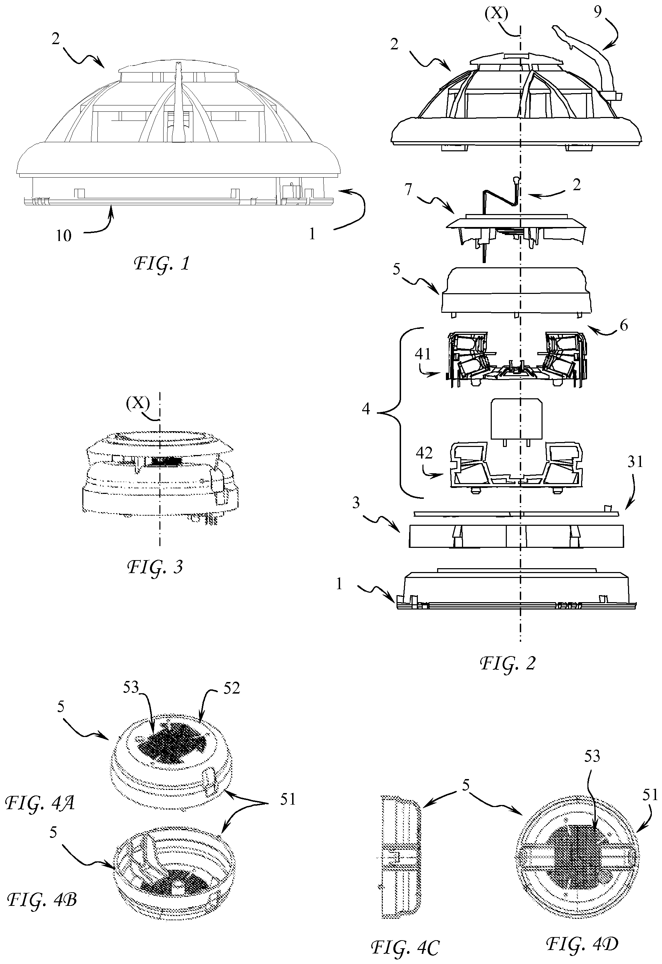

On a représenté à la figure 1 une vue d'ensemble d'un mode de réalisation du détecteur optique selon l'invention. Dans l'exemple illustré, le détecteur a une forme générale extérieure de révolution et plus précisément la forme d'un dôme. Les figures 1 et 2 illustrent le détecteur avec sa base 1 en bas et son sommet en haut. Bien entendu, en situation d'utilisation, la base 1 du détecteur est accolée à un socle (non représenté), qui est classiquement fixé au plafond horizontal d'un local. Dans ce cas, le détecteur est renversé de manière que sa base 1 soit accolée au socle. On précisera que le détecteur comporte à sa base une surface d'appui extérieure 10 ayant une forme sensiblement annulaire destinée à venir au contact du socle en vue de sa fixation. Lorsque le plafond est horizontal, le plan de cette surface d'appui 10 est parallèle au plafond et est donc lui-même horizontal. Dans la suite de l'exposé, les termes d'orientation tels que « haut », « bas », « supérieur », « inférieur » sont donnés en référence à la disposition des éléments sur les figures, sans présager de leur orientation réelle en situation d'utilisation. On adoptera également dans la suite de l'exposé le plan défini par la surface d'appui 10 comme référentiel d'orientation.

En référence à la figure 2, le détecteur comporte une base 1 et une enveloppe 2, qui assemblées l'une à l'autre forment un boîtier renfermant les autres éléments.

Le détecteur comprend, en partant de la base 1 et en remontant vers son sommet, une platine 3 comprenant une unité de traitement 31 incorporant un microcontrôleur en vue de piloter et de traiter les signaux émis par les moyens optoélectroniques qui seront détaillés plus bas. Sur cette platine de traitement 3 est monté un support optique 4 formé de deux parties 41, 42. Le support optique 4 est coiffé d'un capot 5 délimitant une chambre optique 6 dans sa partie supérieure. Un déflecteur 7 destiné à guider la fumée venant du milieu ambiant vers la chambre 6 est assemblé au capot 5 dans la partie supérieur de ce dernier. Le déflecteur 7 supporte en outre une thermistance 8. Comme cela est visible également à la figure 2, le détecteur comprend un témoin lumineux 9.

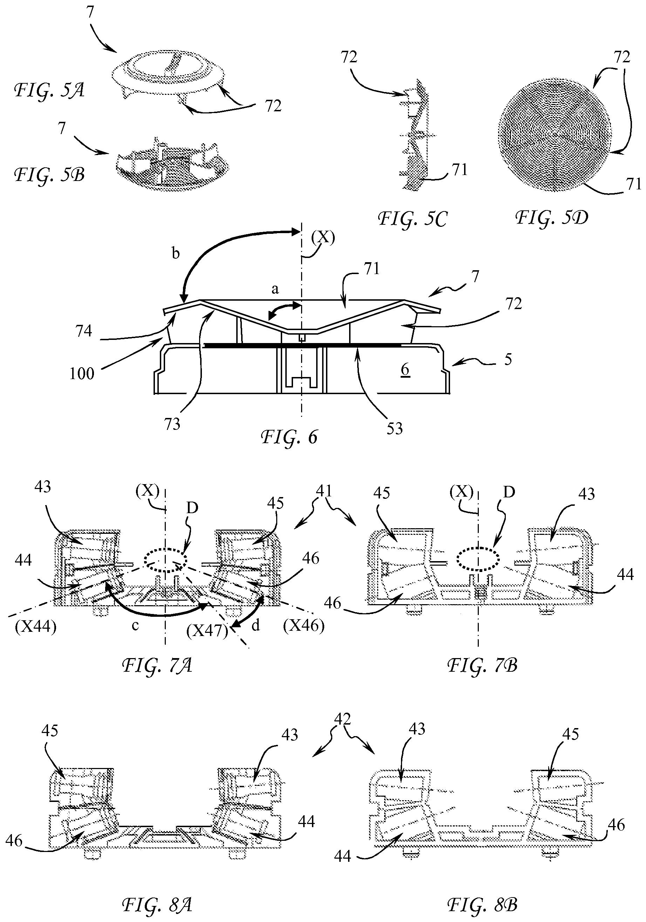

Selon l'invention, la chambre 6 est délimitée dans sa partie supérieure et latérale par un capot 5 ayant une forme générale de révolution autour d'un axe longitudinal X (figures 3 et 6). Cet axe X est sensiblement perpendiculaire au plan défini par la surface d'appui 10. Le capot 5 a la forme d'une cuvette ou d'une cloche, c'est-à-dire qu'il comporte une paroi latérale périphérique 51 ainsi qu'un fond 52 dans sa partie supérieure (figures 4A à 4D). Un congé de raccordement de quelques millimètres est prévu entre la paroi latérale 51 et le fond 52. Le fond 52 est inscrit dans un plan sensiblement parallèle au plan de la surface d'appui 10. En position assemblée, les bords inférieurs du capot 5 viennent épouser la surface supérieure de la platine 3 de manière à fermer la chambre optique 6 dans sa partie inférieure.

Selon une caractéristique avantageuse de l'invention, le capot 5 comporte une paroi d'accès 53 pour l'introduction de la fumée dans la chambre 6 (figures 4A à 4D et 6). Cette paroi d'accès 53 est située dans le même plan que le fond 52 du capot 5 et est sensiblement parallèle au plan de la surface d'appui 10 du détecteur.

La paroi d'accès 53 a une forme générale circulaire ayant un diamètre environ inférieur de moitié à celui du capot 5. La paroi d'accès est constituée d'une grille. La grille est formée d'une première série de nervures parallèles superposées à une seconde série de nervures perpendiculaires aux premières. La distance entre les nervures parallèles est de l'ordre du millimètre. Ainsi les mailles de la grille ont des côtés de l'ordre du millimètre, ce qui empêche l'introduction d'insectes dans la chambre. La hauteur des nervures est également de l'ordre du millimètre, de sorte que la lumière ambiante ne peut être diffusée directement dans la chambre au travers des mailles, au-delà d'une inclinaison d'environ 45° par rapport à l'axe longitudinal X de la chambre 6.

Selon l'invention, le détecteur comporte également un déflecteur 7 accolé à une face extérieure du fond 52 du capot 5 (figures 3 et 6). La face extérieure s'entend par opposition à la face intérieure tournée vers la chambre 6. Le déflecteur 7 a une forme générale de révolution coaxiale avec l'axe longitudinal X de la chambre 6. En référence aux figures 5A à 5D, le déflecteur 7 comprend un corps principal 71 ayant la forme d'une soucoupe ainsi que des nervures 72 disposées radialement sur la face inférieure du corps principal 71, les nervures 72 s'interposant comme des entretoises entre le corps principal 71 et la face extérieure du fond 52 du capot 5. Un espace est ainsi ménagé entre la face inférieure du corps principal 71 et la face extérieure du fond 53 du capot 5. Cet espace forme une voie d'accès périphérique 100 pour l'introduction de la fumée. Les nervures 72 sont réparties angulairement autour de l'axe longitudinal X. Dans l'exemple illustré aux figures 5A à 5D, les nervures sont au nombre de cinq. On notera que l'orientation radiale des nervures 72 permet de guider la fumée vers l'axe X de manière à faciliter sa propagation vers la paroi d'accès 53 et la chambre 6.

Pour faciliter davantage le guidage de la fumée, le déflecteur comprend une première surface de guidage 73 ayant une forme de révolution autour de l'axe longitudinal X, conformée de manière à se rapprocher de la paroi d'accès 53 à mesure que l'on se rapproche de l'axe longitudinal X. Dans le mode de réalisation illustré, la première surface de guidage a une forme générale tronconique dont le sommet est tourné vers la paroi d'accès 53 de la chambre 6. La distance entre la première surface de guidage 73 et la paroi d'accès 53 diminue à mesure que l'on se rapproche de l'axe longitudinal X, ce qui a tendance à forcer l'introduction de la fumée dans la chambre 6. Cette première surface de guidage est par exemple inclinée par rapport à l'axe longitudinal X d'un angle a compris entre 45° et 90° (figure 6).

La première surface de guidage 73 est prolongée à sa périphérie par une seconde surface de guidage 74, également de révolution autour de l'axe longitudinal X. Cette seconde surface peut également avoir une forme générale tronconique, qui forme un angle rentrant avec la première surface 73 dans un plan de section radial passant par l'axe longitudinal X. Cette seconde surface de guidage 73 est par exemple inclinée par rapport à l'axe longitudinal X d'un angle b compris entre 90° et 120°. Cette seconde surface de guidage 74 forme un écran à la manière d'une visière de casquette pour empêcher la diffusion de la lumière ambiante vers la paroi d'accès 53.

On notera que la première surface de guidage 73 est sensiblement à l'aplomb de la paroi d'accès 53, c'est-à-dire que sa projection dans le plan du fond 52 du capot 5 correspond sensiblement aux dimensions de la paroi d'accès 53. Le bord extérieur (ou bord périphérique) de la seconde surface de guidage 74 est situé sensiblement dans le prolongement du bord périphérique du capot 5. L'espace séparant ce bord extérieur de la seconde surface et le fond 52 du capot 5 constitue la voie d'accès 100 pour la fumée évoquée précédemment.

Les première 73 et seconde 74 surfaces de guidage comportent en outre un relief strié pour empêcher la réflexion de la lumière ambiante extérieure vers la paroi d'accès 53. Les stries sont circulaires autour l'axe longitudinal X.

A titre d'exemples, des modes de réalisation sont décrits ci-après.
Le détecteur selon l'invention comprend également un support optique 4 destiné à loger des moyens optoélectroniques émetteurs tels que des diodes luminescentes, autrement appelées LED (pour Light Emitting Diode) ou récepteurs tels que des photodiodes, le tout devant être installé dans la chambre optique 6 (figure 2) où la présence de fumée doit être détectée. Les moyens optoélectroniques ne sont pas représentés sur les figures.

Le support optique 4 est constitué de deux demies parties 41, 42, destinées à être accolées l'une à l'autre selon un plan de joint. La première demie partie 41 illustrée aux figures 7A et 7B constitue un réceptacle pour les moyens optoélectroniques. La seconde demie partie 42 illustrée aux figures 8A et 8D forme un couvercle permettant d'emprisonner les moyens optoélectroniques. Les première 41 et seconde 42 demies parties comportent chacune des empreintes creuses délimitant des logements 43-48 d'accueil des moyens optoélectroniques. Les figures 7A et 8A sont des vues intérieures tandis que les figures 7B et 8B sont des vues extérieures.

Dans un mode de réalisation particulier de l'invention, le support optique 4 comprend au moins trois logements pouvant contenir un moyen optoélectronique d'un premier type et deux moyens optoélectroniques d'un second type, les premiers et second types de moyens optoélectroniques correspondant respectivement à un émetteur et deux récepteurs ou inversement. Autrement dit, le support optique 4 peut avantageusement contenir un émetteur et deux récepteurs ou deux émetteurs et un récepteur, cet agencement permettant de déterminer le type de particules présentes dans la chambre 6 afin de traiter différemment les signaux comme cela a été vu précédemment.

Selon le choix retenu par le constructeur, on pourra par exemple disposer deux émetteurs et un récepteur, afin d'avoir une puissance lumineuse et donc une sensibilité plus importante dans la chambre 6. Inversement, on pourra disposer un émetteur et deux récepteurs, afin de pouvoir faire deux mesures simultanées, ce qui permettra d'économiser du temps et de l'énergie. Ceci constitue des exemples de critères de choix qui ne sont pas limitatifs.

Selon l'invention, le support optique 4 comprend plusieurs logements 43-48 dont une partie seulement peut être occupée par des moyens optoélectroniques et une partie peut rester vacante.

En référence aux figures 7A, 7B, 8A et 8B, le support optique 4 selon l'invention comprend quatre logements 43-46 permettant d'accueillir des émetteurs et deux logements 47, 48 permettant d'accueillir des récepteurs.

Dans l'hypothèse où le constructeur fait le choix d'installer deux émetteurs et un récepteur, on comprend que plusieurs choix s'offriront pour l'installation des émetteurs et des récepteurs. En outre, il est également possible de disposer dans le même support optique 4 un nombre de moyens optoélectronique supérieur à trois, si cela correspond au besoin, notamment d'un procédé de mise en oeuvre particulière du détecteur.

On sait que les moyens optoélectroniques émetteurs (ou LED) et récepteurs (ou photodiodes) sont classiquement caractérisés par un axe respectivement d'émission X44, X46 et de réception X47 d'un faisceau lumineux. Les moyens optoélectroniques sont disposés dans le support optique 4 de manière que leurs axes respectifs soient situés sensiblement dans le même plan.

Dans le mode de réalisation illustré aux figures 2, 7A, 7B ; 8A et 8B, ce plan est sensiblement perpendiculaire au plan de la surface d'appui extérieure 10 du détecteur, c'est-à-dire sensiblement parallèle à l'axe longitudinal X. Autrement dit, dans ce mode de réalisation, les moyens optoélectroniques sont agencés dans une configuration verticale lorsque l'axe longitudinal X est également vertical.

Pour ce faire, le support optique 4 a la forme générale d'un U dont chaque branche est dirigée vers la paroi d'accès et renferme pour chacune deux logements 43-46 destinés à accueillir les émetteurs. Chaque branche a la forme d'une colonne ayant une face tournée vers l'autre branche. Ces logements accueillant les émetteurs comportent des canons ouverts sur ladite face tournée vers l'autre branche. La base du U renferme les logements 47-48 destinés à accueillir un récepteur. Le support optique 4 est sensiblement symétrique par rapport à un plan médian contenant l'axe longitudinal X.

Dans chaque branche du support optique en forme de U, les logements d'accueil 43, 44 ou 45, 46 des deux émetteurs sont superposés. A la base du U, les logements d'accueil 47, 48 des récepteurs sont situés symétriquement de part et d'autre du plan médian évoqué ci-dessus.

Les moyens optoélectroniques sont également agencés de manière que leurs axes convergent vers une même zone de détection D à l'intérieur de la chambre 6, cette zone pouvant avoir différentes formes selon l'agencement choisi, qui vont d'une forme sensiblement ponctuelle à une forme plus étendue. On distinguera bien entendu l'orientation des axes des moyens optoélectroniques et les zones d'émission lumineuses et de réception centrée sur ces axes. En effet, les émetteurs diffusent un faisceau lumineux ayant une forme conique, tandis que les récepteurs captent la lumière dans une zone également conique. La zone de détection D est par conséquent située à l'intérieur de l'intersection de ces différents cônes.

Dans un exemple de réalisation de l'invention (figures 7A), le support optique 4 renferme deux émetteurs luminescents dans leur logement respectifs 44, 46, dont les axes optiques X44, X46 sont inclinés par rapport à l'axe optique X47 du récepteur de deux angles respectifs c, d compris entre 90° et 120° et entre 45° et 90° respectivement.

On notera que cette configuration verticale des moyens optoélectroniques à l'intérieure de la chambre 6, permet de rapprocher la zone de détection D au plus près de la paroi d'accès 53, ce qui garantit la rapidité de détection de la fumée traversant ladite paroi 53.

Toutefois, dans une variante de réalisation non représentée de l'invention, le support optique peut être agencé de façon que les axes des moyens optoélectroniques soient situés dans un plan sensiblement parallèle à la surface d'appui extérieure 10 du détecteur, c'est-à-dire perpendiculaire à l'axe longitudinal X. Dans ce cas, les moyens optoélectroniques sont agencés dans une configuration horizontale lorsque l'axe longitudinal X est vertical.

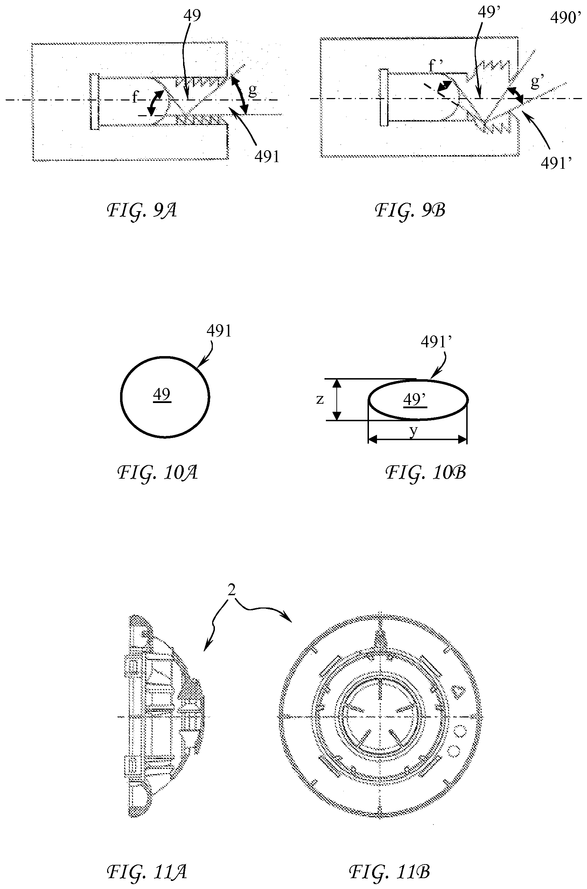

Selon une caractéristique avantageuse de l'invention visible aux figures 9A et 9B, les logements 43-46 destinés à accueillir un émetteur comportent un canon 49, 49' dont la paroi est pourvue d'un relief strié 490, 490'. Les stries sont circulaires autour des axes X44, X46 des émetteurs 43-46. Ce relief est destiné à limiter la réflexion de la lumière sur la surface intérieure du canon.

Le canon 49 peut avoir une forme générale sensiblement cylindrique entre l'extrémité avant de l'émetteur et la bouche 491, comme représenté à la figure 9A.

Dans une variante de réalisation avantageuse de l'invention, représentée à la figure 9B, le canon 49' peut être optimisé en présentant un profil variable. Plus précisément, le canon 49' a un profil général successivement resserré, puis élargi puis resserré dans sa direction longitudinale, depuis l'extrémité avant de l'émetteur jusqu'à la bouche de sortie 491'.

Grâce à ce dispositif, les parois du canon 49' sont moins éclairées par l'émetteur luminescent, c'est-à-dire que le faisceau lumineux en direction des parois du canon 49' présente un angle de diffusion f plus restreint, et atteint des parois plus éloignées latéralement de l'axe de l'émetteur, comparativement à l'agencement de la figure 9A. Ces parois réfléchissent la lumière reçue vers la bouche de sortie 491' du canon, en étant plus en biais par rapport à la bouche, ce qui induit également un angle de diffusion g de la lumière réfléchie plus restreint que dans l'agencement de la figure 9A. Les angles correspondant sont notés f et g à la figure 9A. Cette seconde variante de l'agencement intérieur du canon est particulièrement avantageuse pour diminuer la « pulse de repos » ou « fond » qui désigne la quantité de signal dû à l'émetteur luminescent en absence de fumée. Il est en effet utile de s'assurer que la lumière ne se diffuse pas de travers, de manière à éviter une saturation lumineuse et donc accroître la sensibilité du détecteur.

Pour encore limiter la diffusion de lumière inutile, la bouche de sortie 491' du canon 49' a une forme générale aplatie, telle qu'un ovale ou une ellipse (figure 10B). La bouche a donc une dimension nominale Y dans une première direction parallèle au plan de la surface d'appui extérieure 10 du détecteur et une dimension inférieure Z à la dimension nominale dans une seconde direction perpendiculaire à la première. De cette façon la lumière ne se diffuse pas inutilement vers les parois supérieures et inférieures de la chambre.

Selon un autre mode de réalisation illustré à la figure 10A, la bouche de sortie 491 du canon 49 peut avoir une forme circulaire.

Des écrans 50 agissant comme des visières de casquettes sont également prévus sur le support optique 4, notamment pour éviter l'éblouissement d'un récepteur par un émetteur qui serait orienté vers lui de façon trop frontale (figures 7A et 7B).

Afin de limiter la réflexion de lumière sur les parois internes du détecteur, les éléments internes (capot 5, déflecteur 7, support optique 4...) sont choisis de couleur noire.

On notera par ailleurs que le support optique 4 est monté sur une platine 3 intégrant l'unité de traitement et comporte des moyens de fixation avec le capot 5. Ces moyens de fixation sont par exemple constitués de pattes flexibles prévues sur le capot 5, aptes à s'engager dans des encoches ménagées sur des faces extérieures du support optique 4.

Une base 1 de forme annulaire est montée sur une face inférieure de l'enveloppe 2 et est fixée à cette dernière par des moyens de fixation analogues. La platine 3 intégrant l'unité de traitement et le support optique 4 est fixée sur une face inférieure de la base 1, également par des moyens de fixation analogues. L'ensemble ainsi constitué est ensuite solidarisé avec le socle (non représenté) via des moyens de fixation de type baïonnettes.

Selon une autre caractéristique avantageuse de l'invention, le déflecteur 7 constitue également un support pour une thermistance 8. Celle-ci est située sur une face supérieure du déflecteur, opposée aux surfaces de guidage 73, 74. La thermistance est reliée à l'unité de traitement via une liaison filaire traversant le déflecteur 7 et le capot 4 par un passage adapté. Ce passage sensiblement parallèle à l'axe longitudinal X est excentré par rapport à ce dernier, et est de préférence aligné sur une nervure 72 du déflecteur.

En raison de la compacité du détecteur selon l'invention et de son agencement peu encombrant, ce dernier peut avantageusement comporter d'autres composants tels qu'un capteur de gaz (non représenté).
Par ailleurs, l'enveloppe extérieure 2 supporte un témoin lumineux 9 constitué d'un guide de lumière. Celui-ci s'étend d'une zone périphérique de l'enveloppe extérieure 2, du côté de son extrémité reliée à un émetteur luminescent, jusqu'à une zone adjacente à l'axe longitudinal (X) à son extrémité opposée. Le témoin 9 épouse la forme extérieure bombée de l'enveloppe 2. L'émetteur lumineux utilisé peut être dédié à ce témoin 9. Dans une variante de réalisation avantageuse, l'émetteur lumineux peut être l'un de ceux utilisés dans la chambre de détection 6.
Bien entendu, l'invention n'est pas limitée aux modes de réalisation qui viennent d'être décrits et comprend tous les équivalents techniques de ces moyens compris dans la portée des revendications.

## Revendications

1. Détecteur de fumée comprenant une chambre (6) destinée à accueillir de la fumée pour y être détectée, ladite chambre (6) est délimitée au moins en partie par un capot (5) ayant une forme générale de révolution autour d'un axe longitudinal (X), dont le fond (52) comprend une paroi d'accès (53) pour l'introduction de la fumée, ayant une orientation générale sensiblement parallèle au plan d'une surface d'appui extérieure (10) du détecteur contre son socle, qui est sensiblement horizontal lorsque le détecteur est fixé classiquement à un plafond,
la paroi d'accès a en outre une forme générale circulaire dont le diamètre est d'environ la moitié de celui du capot,
la chambre (6) a une forme de révolution autour d'un axe longitudinal (X), qui est sensiblement vertical lorsque le détecteur est fixé classiquement à un plafond, le capot délimitant la chambre ayant en outre la forme générale d'une cuvette,
le détecteur comprenant en outre un déflecteur (7) destiné à guider la fumée vers la paroi d'accès (53), le déflecteur comprenant un corps principal (71) en forme de soucoupe et étant accolé à une face extérieure du fond (52) du capot (5), via des nervures (72) formant entretoises, de manière à ménager une voie d'accès périphérique (100) pour la fumée, les nervures (72) étant disposées radialement sur la face inférieure du corps principal (71).

2. Détecteur de fumée selon la revendication 1, **caractérisé en ce que** la paroi d'accès (53) est constituée d'une grille conformée pour laisser passer la fumée et interdire l'accès aux insectes.

3. Détecteur de fumée selon la revendication 1 ou 2, **caractérisé en ce que** les nervures (72) sont orientées de manière sensiblement radiale par rapport à l'axe longitudinal (X), de manière à guider la fumée de façon sensiblement radiale depuis la voie d'accès périphérique (100) vers la paroi d'accès (53) de la chambre (6).

4. Détecteur de fumée selon la revendications 2 ou 3, **caractérisé en ce que** le déflecteur (7) comprend une première surface de guidage (73) de révolution autour de l'axe longitudinal (X), conformée de manière à se rapprocher de la paroi d'accès (53) à mesure qu'elle se rapproche latéralement de l'axe longitudinal (X), ladite première surface de guidage (73) étant sensiblement à l'aplomb de la paroi d'accès (53).

5. Détecteur de fumée selon la revendication 4, **caractérisé en ce que** le déflecteur comprend une seconde surface de guidage (74) de révolution autour de l'axe longitudinal (X), prolongeant le bord extérieur de la première surface (73), de manière à présenter un angle rentrant avec la première surface (73), dans un plan de section radial des surfaces de guidage, l'espace ménagé entre le bord extérieur de ladite seconde surface de guidage (74) et la face extérieure du fond (52) du capot (5) constituant la voie d'accès périphérique (100) pour la fumée.

6. Détecteur de fumée selon la revendication 2 ou 3, **caractérisé en ce qu'**au moins l'une desdites surfaces de guidage (73, 74) comporte un relief strié pour empêcher la réflexion de la lumière ambiante extérieure vers la paroi d'accès (53).

7. Détecteur de fumée selon l'une quelconque des revendications 1 à 6, **caractérisé en ce que** le déflecteur (7) et/ou le capot (5) comporte(nt) un passage pour le raccordement filaire d'une thermistance (8), supportée par le déflecteur (7).

8. Détecteur de fumée selon la revendication 7, **caractérisé en ce qu'**il comprend un témoin lumineux (9) constitué d'un guide de lumière s'étendant d'une zone périphérique de l'enveloppe extérieure (2) à son extrémité reliée à un émetteur luminescent, jusqu'à une zone adjacente à l'axe longitudinal (X) à son extrémité opposée.

## Patentansprüche

1. Rauchmelder mit einer Kammer (6) zur Aufnahme von Rauch und deren Erkennung, wobei die Kammer (6) mindestens teilweise durch ein Gehäuse (5) umgrenzt ist, welches allgemein die Form einer Rotation um eine Längsachse (X) hat, dessen Boden (52) eine Eintrittswandung (53) zum Einleiten des Rauchs umfasst, mit einer allgemeinen Ausrichtung im Wesentlichen parallel zur Ebene eines Außenuntergrunds (10) des Rauchmelders gegen seinem Fundament, welches im Wesentlichen horizontal ist, wenn der Rauchmelder klassischerweise an einer Decke befestigt ist,
wobei die Eintrittswandung außerdem allgemein die Form eines Kreises hat, dessen Durchmesser ungefähr die Hälfte dessen der Verkleidung beträgt,
wobei die Kammer (6) die Form einer Rotation um eine Längsachse (X) hat, die im Wesentlichen vertikal liegt, wenn der Rauchmelder klassischerweise an einer Decke befestigt ist, wobei das Gehäuse, welches die Kammer umgrenzt, außerdem allgemein schalenförmig ausgebildet ist,
wobei der Rauchmelder außerdem ein Luftleitblech (7) zur Führung des Rauchs zu der Eintrittswandung (53) umfasst, wobei das Luftleitblech einen Hauptkörper (71) in der Form einer Untertasse umfasst und an einer Außenseite des Bodens (52) des Gehäuses (5) über Rippen (72) als Abstandhalter derart anliegt, um einen Peripherieeintrittsweg (100) für den Rauch freizumachen, wobei die Rippen (72) auf der Unterseite des Hauptkörpers (71) radial angeordnet sind.

2. Rauchmelder nach Anspruch 1, **dadurch gekennzeichnet, dass** die Eintrittswandung (53) aus einem speziell geformten Gitter besteht, welches den Rauch durchlässt und zur Insektensperre dient.

3. Rauchmelder nach Anspruch 1 oder 2, **dadurch gekennzeichnet, dass** die Rippen (72) im Wesentlichen radial zur Längsachse (X) ausgerichtet sind, sodass der Rauch vom Peripherieeintrittsweg (100) ausgehend in Richtung Eintrittswandung (53) der Kammer (6) im Wesentlichen radial geführt wird.

4. Rauchmelder nach Anspruch 2 oder 3, **dadurch gekennzeichnet, dass** das Luftleitblech (7) eine erste Führungsrotationsfläche (73) um die Längsachse (X) umfasst, welche speziell geformt ist, um der Eintrittswandung (53) umso näher zu kommen, je mehr sie sich der Längsachse (X) seitlich nähert, wobei die erste Führungsfläche (73) im Wesentlichen im Lot zur Eintrittswandung (53) angeordnet ist.

5. Rauchmelder nach Anspruch 4, **dadurch gekennzeichnet, dass** das Luftleitblech (7) eine zweite Führungsrotationsfläche (74) um die Längsachse (X) umfasst, welche die Außenkante der ersten Führungsfläche (73) derart verlängert, dass in einer radialen Schnittebene der Führungsflächen eine einspringende Ecke mit der ersten Führungsfläche (73) entsteht, wobei der zwischen der Außenkante der zweiten Führungsfläche (74) und der Außenseite (52) des Gehäuses (5) erzeugte Abstand den Peripherieeintrittsweg (100) für den Rauch bildet.

6. Rauchmelder nach Anspruch 2 oder 3, **dadurch gekennzeichnet, dass** wenigstens eine der Führungsflächen (73, 74) ein geripptes Muster aufweist, um die Spiegelung des äußerlichen Umgebungslichts hin zur Eintrittswandung (53) zu verhindern.

7. Rauchmelder nach einem der Ansprüche 1 bis 6, **dadurch gekennzeichnet, dass** das Luftleitblech (7) und/oder das Gehäuse (5) einen Auslass für die Drahtverbindung eines von dem Luftleitblech (7) getragenen Thermistors (8) umfasst.

8. Rauchmelder nach Anspruch 7, **dadurch gekennzeichnet, dass** er eine Leuchtanzeige (9) bestehend aus einem Lichtleiter umfasst, welcher sich von einem Peripheriebereich der Außenhülle (2) an seinem an einer Leuchtquelle verbundenen Ende bis hin zu einem der Längsachse (X) angrenzenden Bereich an seinem entgegengesetzten Ende erstreckt.

## Claims

1. Smoke detector comprising a chamber (6) intended to receive smoke to be detected therein, said chamber (6) is at least partially delimited by a cover (5) having a general shape of revolution about a longitudinal axis (X), the bottom (52) of which comprises an access wall (53) for smoke to enter, having a general orientation substantially parallel to the plane of an outer support surface (10) of the detector against its base, which is substantially horizontal when the detector is fixed conventionally to a ceiling, furthermore, the access wall has a generally circular shape, the diameter of which is approximately half that of the cover,
the chamber (6) has a shape of revolution about a longitudinal axis (X) which is substantially vertical when the detector is fixed conventionally to a ceiling, the cover delimiting the chamber furthermore having the general shape of a bowl,
the detector furthermore comprising a deflector (7) intended to guide the smoke towards the access wall (53), the deflector comprising a main body (71) in the form of a saucer and being joined to an outer face of the bottom (52) of the cover (5), via ribs (72) forming spacers, so as to arrange a peripheral inlet (100) for smoke, the ribs (72) being arranged radially on the lower face of the main body (71).

2. Smoke detector according to claim 1, **characterized in that** the access wall (53) is constituted by a grill shaped in order to allow smoke to pass through and prevent access by insects.

3. Smoke detector according to claim 1 or 2, **characterized in that** the ribs (72) are positioned substantially radially with respect to the longitudinal axis (X), so as to guide the smoke substantially radially from the peripheral inlet (100) towards the access wall (53) of the chamber (6).

4. Smoke detector according to claims 2 or 3, **characterized in that** the deflector (7) comprises a first guiding surface of revolution (73) about the longitudinal axis (X), shaped so as to come closer to the access wall (53) as it comes closer laterally to the longitudinal axis (X), said first guiding surface (73) being substantially directly above the access wall (53).

5. Smoke detector according to claim 4, **characterized in that** the deflector comprises a second guiding surface of revolution (74) about the longitudinal axis (X), extending the outer edge of the first surface (73), so as to form a re-entrant angle with the first surface (73), in a plane of radial section of the guiding surfaces, the space arranged between the outer edge of said second guiding surface (74) and the outer surface of the bottom (52) of the cover (5) constituting the peripheral inlet (100) for smoke.

6. Smoke detector according to claim 2 or 3, **characterized in that** at least one of said guiding surfaces (73, 74) contains a striated relief to prevent the reflection of external ambient light towards the access wall (53).

7. Smoke detector according to any one of claims 1 to 6, **characterized in that** the deflector (7) and/or the cover (5) contain(s) a passage for the wired connection of a thermistor (8) supported by the deflector (7).

8. Smoke detector according to claim 7, **characterized in that** it comprises a warning light (9) constituted by a light guide extending from a peripheral area of the outer casing (2), its end connected to a light source, to an area adjacent to the longitudinal axis (X) at the opposite end thereof.
